# EUROPÄISCHE PATENTSCHRIFT

(11) **EP 2 252 489 B1**
(45) Veröffentlichungstag und Bekanntmachung des Hinweises auf die Patenterteilung: **24.08.2011**
(21) Anmeldenummer: 08873059.3
(22) Anmeldetag: 11.12.2008
(51) Int. Cl.: B60T 13/58, B60T 13/74

(54) **TECHNIK ZUM BETÄTIGEN EINER HYDRAULISCHEN FESTSTELLBREMSE**
PROCEDURE FOR ACTUATING A HYDRAULIC PARKING BRAKE
TECHNIQUE D'ACTIONNEMENT D'UN FREIN DE STATIONNEMENT HYDRAULIQUE

(30) Priorität: 03.03.2008 DE 102008012338
(43) Veröffentlichungstag der Anmeldung: 24.11.2010
(73) Patentinhaber: Lucas Automotive GmbH, 56070 Koblenz (DE)
(72) Erfinder: KNECHTGES, Josef, 56727 Mayen (DE)
(74) Vertreter: Röthinger, Rainer
(86) Internationale Anmeldenummer: PCT/EP2008/010541
(87) Internationale Veröffentlichungsnummer: WO 2009/109210

(56) Entgegenhaltungen:
- EP-A- 1 614 600
- DE-A1-102005 046 991
- DE-A1-102006 033 333
- FR-A- 2 875 878

## Beschreibung

### Technisches Gebiet

Die Erfindung betrifft allgemein das Gebiet der Feststellbremsen. Im Besonderen ist die Erfindung auf solche Feststellbremsen gerichtet, bei denen zum Aufbauen eines hydraulischen Druckes elektromotorisch betriebene Hydraulikpumpen vorgesehen sind.

### Hintergrund

Aus der EP 0 996 560 A1 ist eine hydraulische Fahrzeugbremse bekannt, die als Betriebsbremse sowie als Feststellbremse (auch Parkbremse genannt) betrieben werden kann. Bei einer Betriebsbremsung wird in üblicher Weise Hydraulikfluid unter Druck in eine von einem beweglichen Bremskolben begrenzte Hydraulikkammer eingeleitet. Der Druckaufbau in der Hydraulikkammer führt zur Verschiebung des Bremskolbens und eines mit dem Bremskolben zusammenwirkenden Reibbelags in Richtung auf eine Bremsscheibe, die von dem angepressten Reibbelag abgebremst wird. Zusammen mit der Bremsscheibe wird dann auch ein drehfest mit der Bremsscheibe gekoppeltes Fahrzeugrad abgebremst.

Damit die Fahrzeugbremse nicht nur als Betriebsbremse, sondern darüber hinaus auch als Feststellbremse verwendet werden kann, weist sie eine elektromotorisch betriebene Mutter/Spindel-Anordnung auf. Die Mutter/Spindel-Anordnung gestattet eine mechanische Betätigung des Bremskolbens sowie ein Feststellen des Bremskolbens in einem Zustand, in dem der Reibbelag an die Bremsscheibe angepresst ist.

Um ein Fahrzeug unter Zuhilfenahme der Feststellbremse auf einer geneigten Fahrbahn sicher abzustellen, sind hohe Spannkräfte notwendig. Damit mittels der Mutter/Spindel-Anordnung hohe Spannkräfte erzeugt werden können, muss der elektromotorische Antrieb für die Mutter/Spindel-Anordnung entsprechend leistungsstark dimensioniert werden.

Um zur Einsparung von Gewicht und Bauraum leistungsschwächere Antriebe für die Mutter/Spindel-Anordnung vorsehen zu können, wird in der DE 10 2005 046 991 A1 vorgeschlagen, die Feststellbremse mittels einer hydraulisch erzeugten Spannkraft zu spannen. Das Erzeugen der hydraulischen Spannkraft im Feststellbremsbetrieb erfolgt üblicherweise unabhängig von einer Bremspedalbetätigung seitens des Fahrers. Genauer gesagt werden für den Aufbau des hydraulischen Drucks im Feststellbremsbetrieb eine elektromotorisch betriebene Hydraulikpumpe verwendet, welche z.B. einem Fahrstabilitätssystem (auch als Electronic Stability Control- oder ESC-System bezeichnet) zugeordnet ist. Die mittels der Pumpe hydraulisch gespannte Feststellbremse muss dann lediglich noch arretiert werden, indem ein von der Mutter/Spindel-Anordnung angetriebenes Stellglied in Anlage an den mittels Hydraulikdrucks verschobenen Bremskolben gebracht wird.

Die mit dem Pumpenbetrieb zum hydraulischen Spannen der Feststellbremse einhergehende Geräuschkulisse wird häufig als störend empfunden. Es wurde zwar versucht, dem Geräuschproblem mittels einer Schwingungsentkopplung am Fahrzeug beizukommen. Diese Maßnahme hat sich jedoch als unzureichend erwiesen. Deswegen wurde zusätzlich angedacht, den Hydraulikdruckaufbau im Feststellbremsbetrieb bei niedriger Motordrehzahl durchzuführen. Der Druckaufbau nimmt dann aber eine längere Zeit in Anspruch, und während dieser (längeren) Zeit sind die Pumpenbetriebgeräusche noch immer - wenn auch etwas vermindert - deutlich wahrnehmbar.

Der Erfindung liegt die Aufgabe zugrunde, eine Technik zum geräuschoptimierten Betrieb einer hydraulischen Feststellbremsanlage anzugeben.

### Abriss der Erfindung

Gemäß einem Aspekt wird ein Verfahren zum Betätigen einer Feststellbremse, die einen in einer Hydraulikkammer aufgenommenen Bremskolben umfasst, der mittels eines hydraulischen Aktuators einerseits und eines mechanischen Aktuators andererseits innerhalb der Hydraulikkammer verschiebbar ist, bereitgestellt. Das Verfahren umfasst die Schritte des Aktivierens des mechanischen Aktuators zum Verschieben des Bremskolbens in der Hydraulikkammer derart, dass sich ein Volumen eines in der Hydraulikkammer aufgenommenen Hydraulikfluids erhöht, des Aktivierens des Hydraulikaktuators bei mittels des mechanischen Aktuators erhöhtem Hydraulikfluidvolumen in der Hydraulikkammer zum Aufbauen oder Erhöhen einer Spannkraft der Feststellbremse und des Betätigens des mechanischen Aktuators zum Halten der Spannkraft.

Im Rahmen des Verschiebens des Bremskolbens mittels des mechanischen Aktuators kann in der Hydraulikkammer ein Unterdruck entstehen, welcher Hydraulikfluid in die Hydraulikkammer ansaugt. Auf diese Weise kann auch ohne Betätigung des hydraulischen Aktuators das Hydraulikfluidvolumen innerhalb der Hydraulikkammer erhöht werden. Der Ansatz, in einer anfänglichen Phase einer Feststellbremsung das Hydraulikfluidvolumen innerhalb der Hydraulikkammer mittels des mechanischen Aktuators zu erhöhen, gestattet es somit, die Laufdauer des hydraulischen Aktuators und die damit einhergehende Geräuschkulisse zu verkürzen.

Der mechanische Aktuator kann nach seiner anfänglichen Aktivierung zur Erhöhung des in der Hydraulikkammer aufgenommenen Hydraulikfluidvolumens wieder abgeschaltet werden und erst zum Halten (und ggf. zum weiteren Erhöhen) einer hydraulisch aufgebauten oder erhöhten Spannkraft wieder aktiviert werden. Es ist auch denkbar, den mechanischen Aktuator immer oder über einen längeren Zeitraum gleichzeitig mit dem hydraulischen Aktuator zu betreiben. So könnte der mechanische Aktuator während der gesamten Betriebsphase des hydraulischen Aktuators aktiviert bleiben. In einem solchen Fall erfolgt jedoch der Spannkraftaufbau zweckmäßigerweise auf hydraulischem Weg, während mechanisch angetriebene Mittel des mechanischen Aktuators dem hydraulisch betätigten Bremskolben im Wesentlichen lediglich hinterhereilen. Der gleichzeitige Betrieb des mechanischen und hydraulischen Aktuators kann die Gesamtdauer des Feststellbremsvorgangs verkürzen, da der mechanische Aktuator insbesondere seine Haltefunktion schneller übernehmen kann.

Wird der mechanische Aktuator in einem zeitlichen Zusammenhang mit dem Aktiveren des hydraulischen Aktuators wieder deaktiviert, sind verschiedene Szenarien für dieses Deaktivieren denkbar. So kann der mechanische Aktuator im Wesentlichen solange aktiviert bleiben, bis von dem Bremskolben Reibbeläge in Anlage an eine Bremsscheibe gebracht worden sind. Mit anderen Worten, der mechanische Aktuator kann bereits eine begrenzte Spannkraft im unteren Spannkraftbereich erzeugen. Es ist aber gleichfalls denkbar, den mechanischen Aktuator bereits vor dem in Anlage gelangen der Reibbeläge an die Bremsscheibe zu deaktivieren. In diesem Fall ist die Aktivierung des mechanischen Aktuators in einer Anfangsphase der Feststellbremsung im Wesentlichen auf die Erhöhung des in der Hydraulikkammer aufgenommen Hydraulikfluidvolumens gerichtet.

Gemäß einer Weiterbildung des ersten Aspektes erfolgt ein fortlaufendes Ermitteln einer sich im Rahmen des Aktivierens des mechanischen Aktuators aufbauenden Spannkraft der Feststellbremse. In Abhängigkeit der ermittelten Spannkraft erfolgt dann das Aktiveren des hydraulischen Aktuators. Das fortlaufende Ermitteln der Spannkraft kann eine Spannkraftschätzung umfassen. Die Spannkraftschätzung ist beispielsweise auf der Grundlage einer Stromaufnahme eines dem mechanischen Aktuator zugeordneten Elektromotors oder auf der Grundlage eines geschätzten oder gemessenen Vorschubs des Bremskolbens möglich.

Das Aktiveren des hydraulischen Aktuators kann dann erfolgen, wenn sich ein Volumen der Hydraulikkammer aufgrund des aktivierten mechanischen Aktuators soweit vergrößert hat, dass zwischen ungefähr 35 % bis 75 % (beispielsweise ungefähr 50 % bis 60 %) der maximalen Hydraulikfluid-Aufnahmekapazität der Hydraulikkammer erreicht sind. Ferner ist denkbar, dass das Aktiveren des hydraulischen Aktuators dann erfolgt, wenn die mittels des mechanischen Aktuators erzeugte Spannkraft einem vorgegebenen oder situationsbedingt ermittelten äquivalenten Hydraulikfluiddruck entspricht. Der äquivalente Hydraulikfluiddruck ist derjenige Druck, welcher in der Hydraulikammer hydraulisch erzeugt werden müsste, um denselben Spannkraftwert zu erzielen. Gemäß einer Variante beträgt dieser äquivalente Hydraulikfluiddruck ungefähr 10 bis 50 bar (beispielsweise ungefähr 35 bis 45 bar).

Gemäß einer Weiterbildung umfasst das Verfahren ein fortlaufendes Ermitteln einer sich im Rahmen des Aktivierens des hydraulischen Aktuators aufbauenden Spannkraft der Feststellbremse. Der hydraulische Aktuator kann dann in Abhängigkeit der ermittelten Spannkraft deaktivert werden. Wurde der mechanische Aktuator während des Spannkraftaufbaus oder der Spannkrafterhöhung mittels des hydraulischen Aktuators zumindest kurzzeitig deaktiviert, kann in einem zeitlichen Zusammenhang mit dem Deaktivieren des hydraulischen Aktuators ein erneutes Aktivieren des mechanischen Aktuators erfolgen.

Das fortlaufende Ermitteln der Spannkraft im Zusammenhang mit dem Deaktivieren des hydraulischen Aktuators und/oder dem erneuten Aktiveren des mechanischen Aktuators kann auf unterschiedliche Art und Weise erfolgen. So basiert die Spannkraftermittlung beispielsweise auf einer Spannkraftschätzung etwa auf der Grundlage einer Stromaufnahme eines dem hydraulischen Aktuator zugeordneten Elektromotors oder auf der Grundlage eines geschätzten oder gemessenen Hydraulikfluiddrucks.

Gemäß einem weiteren Aspekt wird ein Computerprogrammprodukt mit Programmcodemitteln zum Durchführen des hier beschriebenen Verfahrens zur Verfügung gestellt, wenn das Computerprogrammprodukt auf einer computergesteuerten Verarbeitungseinheit läuft. Eine solche Verarbeitungseinheit kann ein elektronisches Steuergerät (Electronic Control Unit, ECU) an oder in dem Kraftfahrzeug umfassen. Die Verarbeitungseinheit kann auch weitere Funktionen des Kraftfahrzeugs steuern (beispielsweise Bremsfunktionen wie die eines Antiblockiersystems, ABS, eines ESC-Systems oder einer Berganfahr-Hilfe).

Das Computerprogrammprodukt kann auf einem computerlesbaren Datenträger gespeichert sein. Beispielsweise kann das Computerprogrammprodukt auf einem entfernbaren Datenträger, wie beispielsweise einer Diskette, einer Festplatte, einer CD-Rom oder einer DVD, oder auf einem festen Datenträger, wie beispielsweise einem Halbleiterspeicher (etwa einem RAM, ROM, EPROM, EEPROM, Flash-Speicher, usw.) gespeichert sein.

Gemäß einem dritten Aspekt wird eine Feststellbremse zur Verfügung gestellt, die einen in einer Hydraulikkammer aufgenommenen Bremskolben umfasst, der mittels eines hydraulischen Aktuators einerseits und eines mechanischen Aktuators andererseits in der Hydraulikkammer verschiebbar ist. Die Feststellbremse umfasst ein erstes Steuermodul, das ausgebildet ist, den mechanischen Aktuator zum Verschieben des Bremskolbens in der Hydraulikkammer derart zu aktivieren, dass sich ein Volumen eines in der Hydraulikkammer aufgenommenen Hydraulikfluids erhöht, ein zweites Steuermodul, das ausgebildet ist, den hydraulischen Aktuator bei mittels des mechanischen Aktuators erhöhtem Hydraulikfluidvolumen in der Hydraulikkammer zu aktivieren, um eine Spannkraft der Feststellbremse aufzubauen oder zu erhöhen, und ein drittes Steuermodul, das ausgebildet ist, den mechanischen Aktuator zum Halten der Spannkraft zu betätigen.

Der hydraulische Aktuator kann mindestens eine, elektromotorisch betätigbare Hydraulikpumpe umfassen. Ferner kann der mechanische Aktuator eine mit dem Bremskolben zusammenwirkende, elektromotorisch betätigbare Mutter/Spindel-Anordnung umfassen.

Die Feststellbremse kann mit einer Einrichtung zur fortlaufenden Spannkraftermittlung ausgerüstet sein, damit die Aktuatoren in Abhängigkeit der ermittelten Spannkraft angesteuert werden können. Die Einrichtung zur fortlaufenden Spannkraftermittlung kann einen Hydraulikdrucksensor umfassen. Alternativ oder zusätzlich hierzu kann die Einrichtung zur fortlaufenden Spannkraftermittlung einen Sensor zur Erfassung einer Stromaufnahme wenigstens einer Aktuatorkomponente (beispielsweise eines Elektromotors) umfassen.

### Kurze Beschreibung der Zeichnungen

Weitere Einzelheiten, Vorteile und Ausgestaltungen der Erfindung ergeben sich aus der nachfolgenden Beschreibung bevorzugter Ausführungsbeispiele sowie aus den Figuren. Es zeigen:
- Fig. 1: ein hydraulisches Feststellbremssystem gemäß einem Ausführungsbeispiel;
- Fig. 2: eine Radbremse des hydraulisches Feststeilbremssystems gemäß Fig. 1;
- Fig. 3: ein schematisches Diagramm, das die Verläufe von Bremsdruck, Kolbenweg und Spannkraft bei einer herkömmlichen hydraulischen Feststellbremse zeigt;
- Fig. 4: ein schematisches Diagramm, das die Verläufe von Volumenaufnahme, För- dervolumen und Bremsdruck zeigt;
- Fig. 5: ein schematisches Diagramm, das die Verläufe von Bremsdruck, Kolbenweg und Spannkraft gemäß einem Ausführungsbeispiel zeigt;
- Fig. 6: ein schematisches Diagramm, das einen Vergleich der Verläufe von Brems- druck, Kolbenweg und Spannkraft bei einer herkömmlichen hydraulischen Feststellbremse und gemäß einem Ausführungsbeispiel zeigt;
- Fig. 7: ein schematisches Diagramm, das die Verläufe von Bremsdruck, Kolbenweg und Spannkraft sowie die Aktuator-Ansteuerung gemäß einem Ausführungs- beispiel zeigt; und
- Fig. 8: eine detaillierte Darstellung der Aktuator-Ansteuerung gemäß Fig. 7.

### Beschreibung bevorzugter Ausführungsbeispiele

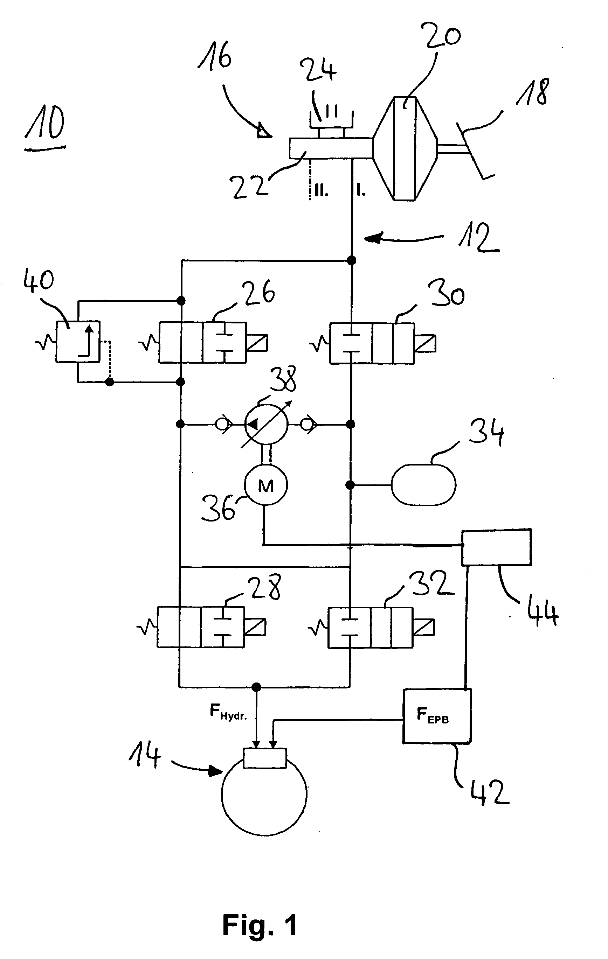

Fig. 1 zeigt ein Ausführungsbeispiel eines Kraftfahrzeug-Bremssystems 10 mit hydraulischer Feststellbrems-Funktionalität. Das Bremssystem 10 umfasst zwei separate Brems- oder Hydraulikkreise mit einer Bremskreisaufteilung beispielsweise des x-Split-Typs, bei dem jeweils ein Vorderrad und das gegenüberliegende Hinterrad des Kraftfahrzeugs genau einem der beiden Bremskreis zugeordnet sind. Der Einfachheit halber ist in Fig. 1 lediglich ein einziger Bremskreis 12 mit nur einer einzigen Radbremse 14 ausführlicher dargestellt.

Für Betriebsbremsungen ist eine in üblicher Weise ausgebildete Bremsdruckgebereinheit 16 vorgesehen. Die Bremsdruckgebereinheit 16 umfasst ein Bremspedal 18, einen Bremskraftverstärker 20, einen mit beiden Bremskreisen gekoppelten Hauptzylinder 22 sowie ein druckloses Reservoir 24 für Hydraulikfluid. Abweichend von dem in Fig. 1 dargestellten Ausführungsbeispiel, bei dem der Radbremsdruck für Betriebsbremsungen mittels Hubkraft erzeugt wird, könnte die Erfindung auch bei einem Brake-By-Wire-System (auch elektrohydraulisches Bremssystem, EHB, genannt) implementiert werden.

In dem einzigen in Fig. 1 veranschaulichten Bremskreis 12 sind vier Ventilanordnungen 26, 28, 30, 32, eine der Ventilanordnung 26 in bekannter Weise zugeordnete Überdruckkomponente 40, ein Druckspeicher 34 für Hydraulikfluid sowie ein ESC-Hydraulikaggregat mit einem Elektromotor 36 und einer vom Elektromotor 36 angetriebenen Druckgebereinheit in Form einer Hydraulikpumpe 38 vorgesehen.

Das Hydraulikaggregat mit dem Elektromotor 36 und der Hydraulikpumpe 38 bildet einen hydraulischen Aktuator, der, wie unten erläutert werden wird, auch bei Feststellbremsungen zum Einsatz gelangt. Darüber hinaus kommen im Feststellbremsbetrieb zusätzlich ein mechanischer Aktuator 42 sowie eine elektrisch mit dem mechanischen Aktuator 42 und dem Elektromotor 36 des hydraulischen Aktuators gekoppelte Steuereinrichtung in Gestalt einer Elektronischen Steuereinheit oder Electronic Control Unit (ECU) 44 zum Einsatz. Wie in Fig. 1 angedeutet, lässt sich mittels des hydraulischen Aktuators 36, 38 an der Radbremse 14 eine hydraulischer Spannkraftanteil F_{Hydr}. erzeugen, während mittels des mechanischen Aktuators 42 ein mechanischer Spannkraftanteil F_{EPB} erzeugt werden kann. Die Abkürzung EPB steht hier für "Elektrische Parkbremse".

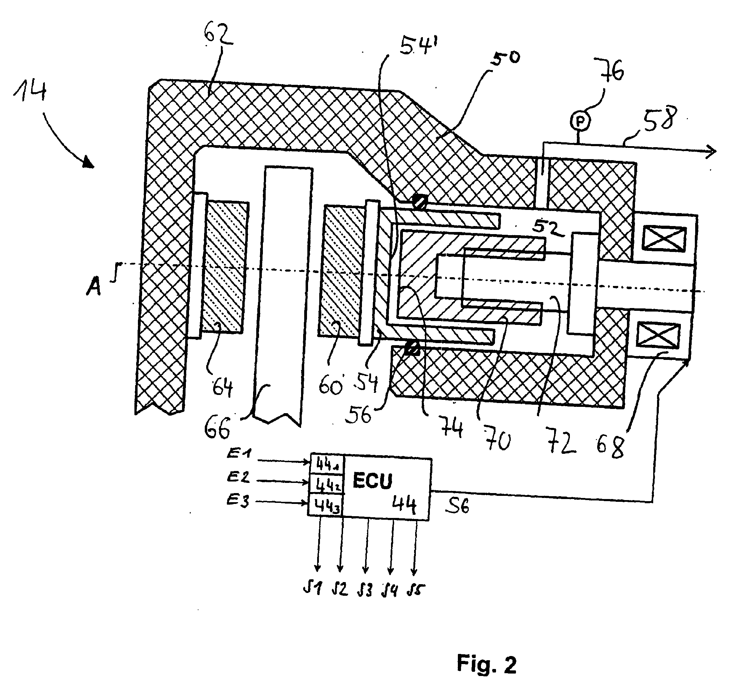

Der in Fig. 1 nur schematisch veranschaulichte mechanische Aktuator 42 beinhaltet im Ausführungsbeispiel eine mechanische Komponente in Form einer Mutter/SpindelAnordnung sowie einen hierfür vorgesehenen elektromotorischen Antrieb. Diese Komponenten werden nun im Zusammenhang mit der in Fig. 2 in einem Längsschnitt bezüglich einer Längsachse A dargestellten Radbremse 14 näher erläutert.

Die Radbremse 14 umfasst ein Gehäuse 50 mit einer Hydraulikkammer 52, in der ein Bremskolben 54 koaxial zur Längsachse A des Gehäuses verschiebbar aufgenommen ist. Eine Dichtungsanordnung 56 dichtet den Bremskolben 54 bezüglich der Hydraulikkammer 52 ab. Die Hydraulikkammer 52 ist an eine Hydraulikleitung 58 angeschlossen, welche die Radbremse 14 mit den in Fig. 1 dargestellten Ventilanordnungen 28, 32 verbindet. Über die Hydraulikleitung 58 kann in die Hydraulikkammer 52 unter Druck stehendes Hydraulikfluid zum Verschieben des Bremskolbens 54 eingeleitet werden.

Der Bremskolben 54 wirkt bei einer Verschiebung unmittelbar auf einen ersten Reibbelag 60, und (gemäß dem Schwimmsattelprinzip) über einen an dem Gehäuse 50 ausgebildeten Bremssattel 62 mittelbar auf einen zweiten Reibbelag 64. Zwischen dem ersten und dem zweiten Reibbelag 60, 64 ist ein Drehglied in Gestalt einer Bremsscheibe 66 angeordnet, die (nicht näher dargestellt) drehfest mit einem Rad des Fahrzeugs verbunden ist. Erfolgt aufgrund eines in die Hydraulikkammer 13 eingeleiteten Hydraulikdrucks eine Verschiebung des Bremskolbens 54 in Fig. 2 nach links, so werden zum Erzeugen einer Spannkraft (auch Bremskraft, Zuspannkraft oder Klemmkraft genannt) die Reibbeläge 60, 64 gegen die Seitenflächen der Bremsscheibe 66 gespannt. Dieses hydraulische Zuspannen kann sowohl im Rahmen einer Betriebsbremsung als auch im Rahmen einer Feststellbremsung erfolgen.

Die Radbremse 14 besitzt speziell für Feststellbremsungen weiter einen mechanischen Aktuator, welcher einen Elektromotor 68 sowie eine als Mutter/SpindelAnordnung 70, 72 ausgebildete Getriebeeinheit umfasst. Der Elektromotor 68 ist von der Steuereinheit 44 über Steuersignale elektrisch ansteuerbar. Die Mutter/SpindelAnordnung 70, 72 setzt dabei eine Drehbewegung des Elektromotors 68 in eine Längsbewegung für ein Stellglied 74 um. Das Stellglied 74 ist koaxial zu der Längsachse A verschiebbar, innerhalb der Hydraulikkammer 52 angeordnet und wirkt auf einen Boden 54' des Bremskolbens 54. Dadurch kann bei geeigneter Ansteuerung des Elektromotors 68 eine Verschiebung des Stellglieds 74 in Fig. 2 nach links in Richtung auf die Bremsbeläge 60, 64 sowie in die umgekehrte Richtung erzeugt werden.

Die Steuereinheit 44 verfügt über einer Reihe von Ausgängen S1 bis S6 zur Bereitstellung von Steuersignalen u.a. an die in den Fign. 1 und 2 dargestellten Komponenten. In Fig. 2 ist der Ausgang S6 beispielhaft mit dem Elektromotor 68 verbunden. Ein weiterer Ausgang ist, wie in Fig. 1 gezeigt, mit dem Elektromotor 36 verbunden.

Der Steuereinheit ECU 44 werden darüber hinaus über Eingangssignale E1 von entsprechenden (nicht näher dargestellten) Sensoren erfasste Informationen über Betriebszustände des Fahrzeugs zur Verarbeitung zugeführt. Zu diesen Betriebszuständen gehöhren die Drehzahlen der Bremsscheibe 66 bzw. der zugehörigen Räder des Fahrzeugs, um unter Anderem den Stillstand des Fahrzeugs zu erkennen, die Neigung der Fahrbahn, auf der das Fahrzeug im Feststellbremsbetrieb im Stillstand zu halten ist, und den Beladungszustand des Fahrzeugs. Über Eingangssignale E2 wird der Steuereinheit 44 von einem (nicht näher dargestellten) Schaltmittel, das vom Fahrer bedienbar ist, mitgeteilt, dass ein Feststellbremsbetrieb gewünscht ist, um das Fahrzeug z.B. im Stillstand zu halten. Darüber hinaus kann im Rahmen einer "Hill-Hold"- oder "Auto-Hold"-Funktion auch eine vom Fahrerwillen unabhängige, also automatische, Feststellbremsung erfolgen, z.B. wenn nach Überschreiten einer bestimmten Zeitdauer das Fahrzeug nicht mehr durch das Betriebsbremssystem, sondern durch die Feststellbremssystem im Stillstand zu halten ist.

Optional kann auch ein Drucksensor 76 vorgesehen sein, der den in der Hydraulikkammer 52 bzw. Hydraulikleitung 58 vorherrschenden Druck erfasst und über Eingangssignale E3 an die Steuereinheit 44 übermittelt. Der in der Hydraulikkammer 52 erzeugte Hydraulikdruck ist eine zum Regeln/Steuern des Feststellbremsbetriebs relevante Größe. Zusätzlich - oder wenn der Drucksensor 78 nicht vorhanden ist - kann der Hydraulikdruck bzw. die Spannkraft anhand mathematischer Modelle ermittelt werden, im Fall des Feststellbremsbetriebs z.B. auf Grundlage einer Stromaufnahme der Elektromotoren 36 und 68.

Wie bereits im einleitenden Teil erläutert, werden die Feststellbremsanlagen des Stands der Technik herkömmlicherweise derart betätigt, dass der hydraulische Aktuator einer Feststellbremse den gesamten Spannkraftaufbau alleine bewältigt. Die mechanischen Aktuatoren werden erst dann angesteuert, wenn sie dem aufgrund des hydraulisch erzeugten Drucks vorauseilenden Bremskolben im Wesentlichen kraftlos hinterhereilen können. Erst am Ende des Bremskolbenwegs erfolgt ein kräftiges Anlehnen des Stellglieds 74 an den Bremskolben 54, um dessen Setzverhalten nach Abbau des Hydraulikdrucks auszugleichen. Die hydraulisch erzeugte Spannkraft wird dann aufgrund der selbsthemmenden Ausbildung der Mutter/Spindel-Anordnung 70, 72 aufrecht erhalten, und der Elektromotor 68 kann abgeschaltet werden.

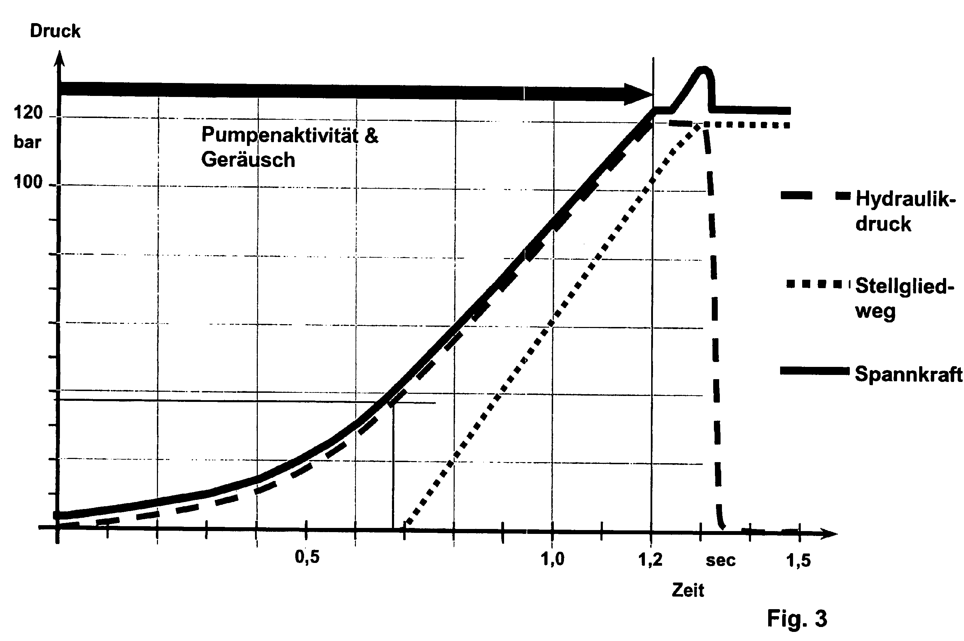

Fig. 3 veranschaulicht eine solche herkömmliche Feststellbremsung in einem Druck/Zeitdiagramm. Wie sich aus diesem Diagramm ergibt, ist die mittels der Reibbeläge 60, 64 erzeugte Spannkraft proportional zu dem in der Hydraulikkammer 52 hydraulisch erzeugten Bremsdruck (die Spannkraft ist in Fig. 3 in willkürlichen Einheiten dargestellt). Fig. 3 veranschaulicht in ebenfalls willkürlichen Einheiten den Weg des Stellglieds 74. Deutlich zu erkennen ist der Sachverhalt, dass das Stellglied 74 dem Bremskolben 54 (und damit auch dem Spannkraftaufbau) nacheilt. Ferner ist zu erkennen, dass das Stellglied 74 nach Abbau des Hydraulikdrucks seinen maximalen Fahrweg erreicht hat und das Halten der Spannkraft übernimmt. Die Spannkraftspitze kurz vor Wegnahme des hydraulisch erzeugten Bremsdrucks ist auf das in Anlage gelangen des Stellglieds 74 an den Bremskolben 54 zurückzuführen.

Das Diagramm gemäß Fig. 3 verdeutlicht, dass der maximale Hydraulikdruck von ungefähr 120 bar nach 1,2 Sekunden Laufzeit des hydraulischen Aktuators (d.h. des Elektromotors 36 und der Pumpe 38 gemäß Fig. 1) erreicht ist. Auch die mit dem Betrieb des hydraulischen Aktuators einhergehenden Geräusche sind deshalb für 1,2 Sekunden deutlich wahrnehmbar.

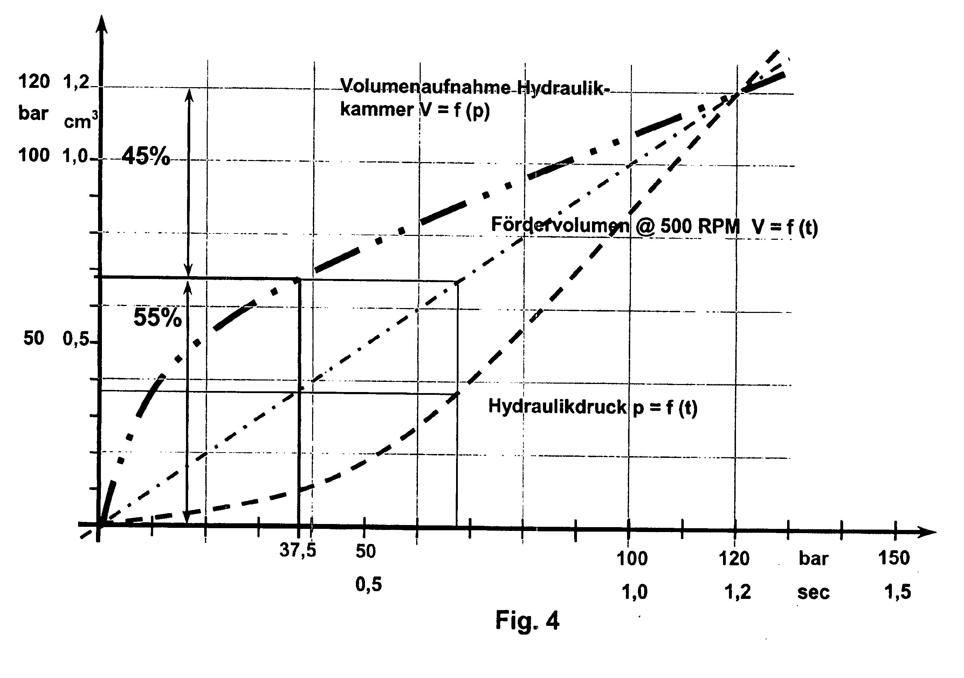

Es hat sich nun herausgestellt, dass bei der in Fig. 3 skizzierten Hydraulikdruckerzeugung ungefähr 55 % des maximalen Hydraulikfluid-Aufnahmevolumens der Hydraulikkammer 52 bis zum Aufbau einer Spannkraft erreicht sind, die einem Hydraulikdruck von ungefähr 37,5 bar entspricht (wie im Zusammenhang mit Fig. 3 erläutert, kann hier von einem ungefähr proportionalen Zusammenhang zwischen Hydrautikdruck und Spannkraft ausgegangen werden). Dieser Sachverhalt ist in dem Volumen/Hydraulikdruck-Diagramm gemäß Fig. 4 veranschaulicht, und der exemplarische Wert von 37,5 bar wurde deswegen gewählt, da die diesem Hydraulikdruck äquivalente Spannkraft gerade noch mittels des mechanischen Aktuators erzielt werden kann.

Wie in Fig. 4 weiter veranschaulicht, werden bei einer konstanten Drehzahl des die Pumpe 38 antreibenden Elektromotors 36 für eine Förderung von 55 % des maximal benötigten Fördervolumens auch 55 % der Gesamtzeit für den Druckaufbau von 120 bar benötigt. Basierend auf dieser Erkenntnis wird im vorliegenden Ausführungsbeispiel ein geräuschoptimierter Betrieb der in den Fign. 1 und 2 veranschaulichten Feststellbremsanlage vorgeschlagen. Der geräuschoptimierte Betrieb basiert im Wesentlichen darauf, dass der Spannkraftaufbau bis zu einem äquivalenten Hydraulikdruckwert von ungefähr 37,5 bar von dem mechanischen Aktuator übernommen wird. Mit anderen Worten, ein Aktiveren des hydraulischen Aktuators wird bis zu einem Zeitpunkt verzögert, zu dem mittels des mechanischen Aktuators eine Spannkraft aufgebaut wurde, die einem äquivalenten Hydraulikfluiddruck von 37,5 bar entspricht. Die Gesamtlaufdauer des hydraulischen Aktuators und die damit einhergehenden Geräusche lassen sich dadurch deutlich reduzieren.

Zur Implementierung einer solchermaßen geräuschoptimierten Feststellbremsung ist das Steuergerät 44, wie in Fig. 2 veranschaulicht, mit drei Steuermodulen 44₁, 44₂, 44₃ ausgerüstet.

Das erste Steuermodul 44₁ ist ausgebildet, den mechanischen Aktuator zum Verschieben des Bremskolbens 54 in der Hydraulikkammer 52 derart zu aktivieren, dass die Reibbeläge 60, 64 in Anlage an die Bremsscheibe 66 gelangen. Im Ausführungsbeispiel ist der mechanische Aktuator derart ausgebildet, dass allein der mechanische Aktuator den Aufbau einer Spannkraft, welche einem äquivalenten Hydraulikfluiddruck von 37,5 bar entspricht, ermöglicht. In Folge des Verschiebens des Bremskolbens 54 mittels des mechanischen Aktuators erhöht sich das Volumen des in der Hydraulikkammer 52 aufgenommenen Hydraulikfluids. Dieser Sachverhalt ist darauf zurückzuführen, dass sich beim Verschieben des Kolbens 54 mittels des mechanischen Aktuators ein Unterdruck in der Hydraulikkammer 52 einstellt, und dieser Unterdruck saugt Hydraulikfluid über die Hydraulikleitung 58 in die Hydraulikkammer 52.

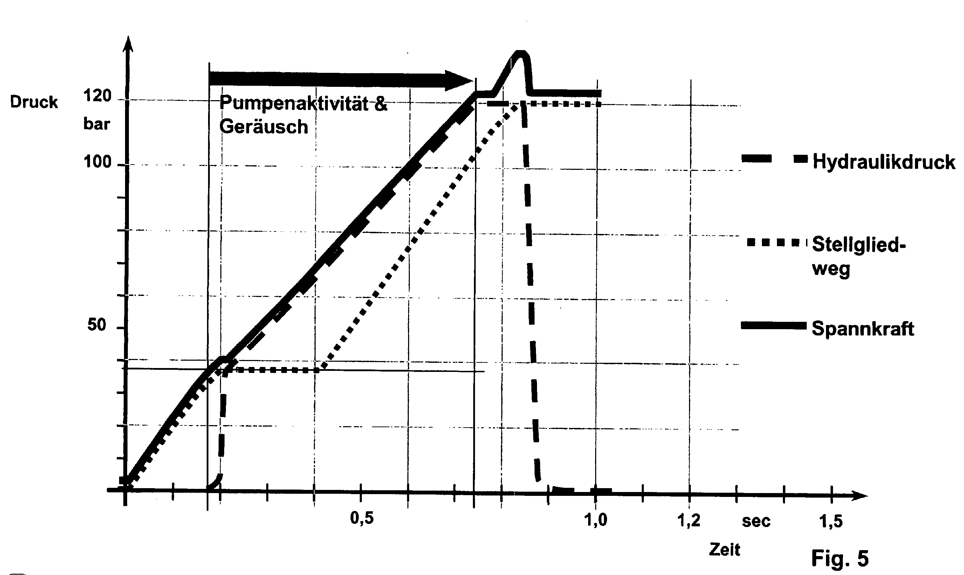

Der Gesamtzusammenhang ist in dem schematischen Druck/Zeitdiagramm der Fig. 5 graphisch veranschaulicht. Deutlich zu erkennen ist die Spannkraftzunahme in einem Äquivalent-Bereich von ungefähr 0 bis 37,5 bar, welche auf das Verschieben des Bremskolbens 54 mittels des mechanischen Aktuators zurückgeht. Bis zu einem äquivalenten Hydraulikdruckwert von knapp unter 37,5 bar bleibt der hydraulische Aktuator deaktiviert.

Das zweite Steuermodul 44₂ des Steuergeräts 44 ist ausgebildet, den hydraulischen Aktuator bei mittels des mechanischen Aktuators erhöhtem Hydraulikfluidvolumen innerhalb der Hydraulikkammer 52 zu aktivieren, um die Spannkraft der Feststellbremse weiter zu erhöhen. Auch dieser Sachverhalt ist in Fig. 5 veranschaulicht. Sobald mittels des mechanischen Aktuators eine Spannkraft aufgebaut ist, die dem maximalen Leistungsvermögen des mechanischen Aktuators entspricht, wird nach ungefähr 0,18 Sekunden der hydraulische Aktuator aktiviert und der mechanische Aktuator kurz darauf deaktiviert. Bei Aktivieren des hydraulischen Aktuators stellt sich bereits nach ungefähr 0,2 Sekunden ein Hydraulikdruckwert von 37,5 bar ein, und der weitere Spannkraftaufbau erfolgt bis zu einem Wert von 120 bar mittels des hydraulischen Aktuators.

Das dritte Steuermodul 44₃ des Steuergeräts 44 ist ausgebildet, den mechanischen Aktuator zum Halten der Spannkraft zu betätigen. Zu diesem Zweck wird der mechanische Aktuator nach ungefähr 0,4 Sekunden erneut aktiviert. In Folge dieses erneuten Aktivierens des mechanischen Aktuators eilt das Stellglied 74, wie durch die Kurve in Fig. 5 angedeutet, dem Bremskolben 54 hinterher. Kurz nach Erreichen des maximalen Hydraulikdrucks von 120 bar gelangt das Stellglied 74 dann in gewohnter Weise wieder in Anlage an den Bremskolben 54. Der mechanische Aktuator arretiert bei diesem Hydraulikdruckwert somit den Bremskolben 54 und fixiert die vom Bremskolben 54 erzeugte Spannkraft. Der hydraulische Aktuator kann dann abgeschaltet werden (was in dem in Fig. 5 gezeigten Hydraulikdruckabfall resultiert). Ferner kann aufgrund der selbsthemmenden Auslegung des mechanischen Aktuators auch der dem mechanischen Aktuator zugeordnete Elektromotor 68 abgestellt werden.

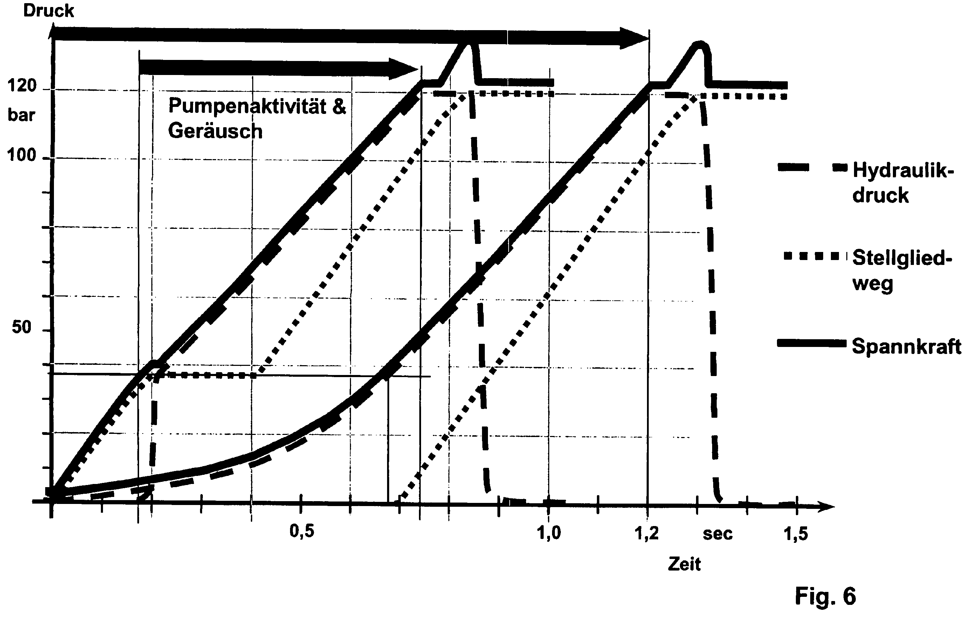

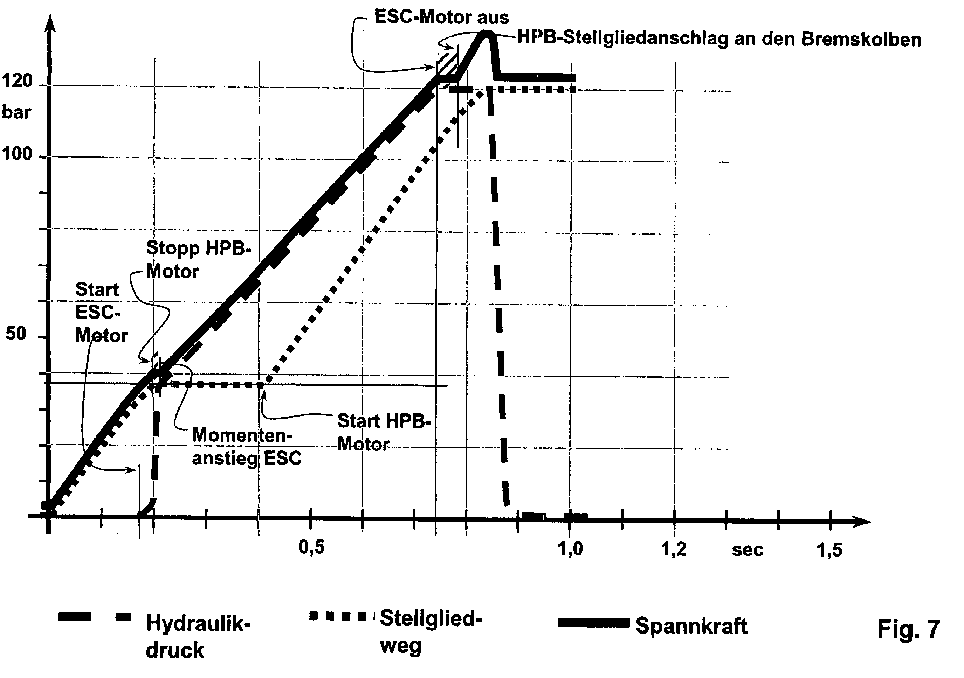

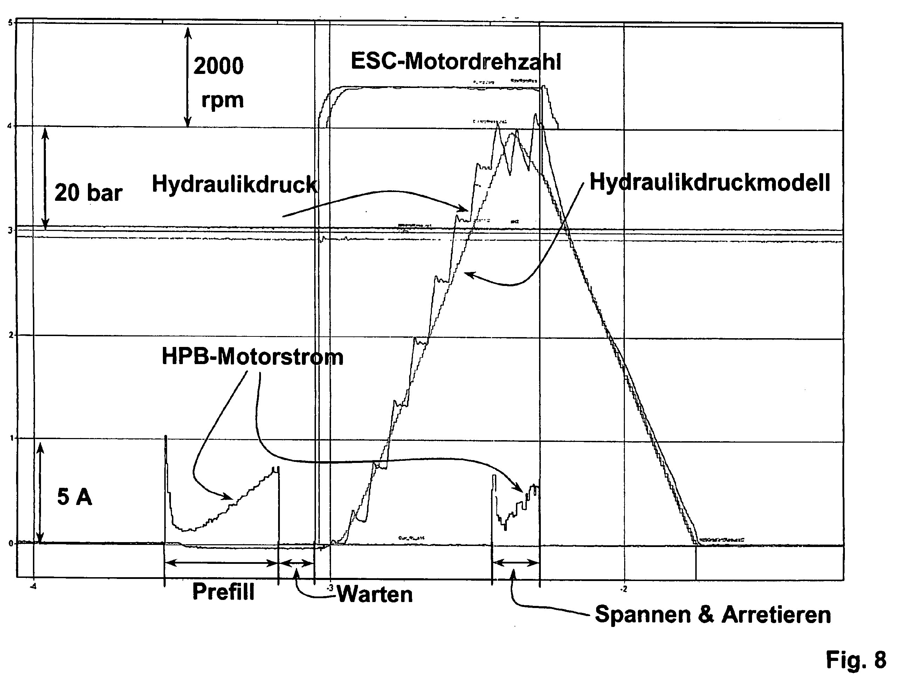

Wie sich aus Fig. 5 ergibt, muss der hydraulische Aktuator erst ungefähr bei einer Spannkraft, die einem äquivalenten Hydraulikdruck von 37,5 bar entspricht, aktiviert werden. Die Betriebsdauer des hydraulischen Aktuators im Rahmen einer Feststellbremsung lässt sich aus diesem Grund deutlich reduzieren. Fig. 6 zeigt in diesem Zusammenhang eine vergleichende Darstellung der herkömmlichen Feststellbremsung gemäß Fig. 3 sowie der Feststellbremsung gemäß dem in Fig. 5 skizzierten Ausführungsbeispiel. Aus diesem Vergleich ergibt sich nicht nur eine Verkürzung der Betriebsdauer des hydraulischen Aktuators von ungefähr 55%, sondern darüber hinaus auch eine Reduzierung der Gesamtzuspannzeit von ungefähr 40 %. Die kürzere Zuspannzeit ist auf die hohe Steifigkeit der Bremse oberhalb ungefähr 37 bar zurückzuführen, die mit einer vergleichsweise geringen Druckaufbauzeit einhergeht. In den Fign. 7 und 8 ist noch einmal die zeitliche Steuerung des mechanischen Aktuators einerseits und des hydraulischen Aktuators andererseits veranschaulicht. Genauer gesagt ist in den Fign. 7 und 8 jeweils die Ansteuerung des Elektromotors 36 des hydraulischen Aktuators (in den Zeichnungen ESC-Motor genannt) und des Elektromotors 68 des mechanischen Aktuators (in den Zeichnungen HPB-Motor genannt) veranschaulicht. Das Diagramm der Fig. 7 entspricht dabei dem Diagramm der Fig. 5.

Wie in Fig. 7 erkennbar, beginnt die Feststellbremsung mit dem Start des Elektromotors 68 des mechanischen Aktuators (HPB-Motor) zum Zeitpunkt 0. Kurz vor Erreichen der mit dem mechanischen Aktuator maximal erzielbaren Zuspannkraft (entsprechend einem äquivalenten Hydraulikfluiddruck von 37,5 bar) wird ungefähr nach 0,18 Sekunden der Elektromotor 36 des hydraulischen Aktuators (ESC-Motor) gestartet.

Zu einem Zeitpunkt von ungefähr 0,2 Sekunden, also vergleichsweise rasch, ist von dem hydraulischen Aktuator ein Hydraulikfluiddruck von ungefähr 37,5 bar erzeugt worden, und die weitere Zuspannkrafterhöhung kann damit auf hydraulisches Weg erfolgen. Aus diesem Grund wird der Elektromotor 68 des mechanischen Aktuators kurzzeitig abgestellt. Nach ungefähr 0,4 Sekunden wird der Elektromotor 68 des mechanischen Aktuators wieder aktiviert, und das Stellglied 74 eilt im Wesentlichen kraftlos dem hydraulisch betätigten Bremskolben 54 hinterher. Dann, nach ungefähr 0,74 Sekunden, wurde mittels des hydraulischen Aktuators der maximale Hydraulikfluiddruck von 120 bar und damit auch die maximal gewünschte Zuspannkraft erzielt. Der Elektromotor 36 des hydraulischen Aktuators kann zu diesem Zeitpunkt abgeschaltet werden, da kurz darauf, nämlich nach ungefähr 0,76 Sekunden, das Stellglied 74 in Anlage an den Bremskolben 54 gelangt, diesen arretiert und die hydraulisch erzeugte Spannkraft damit mechanisch aufrecht erhalten bleibt.

Hierbei ist zu beachten, dass zwischen dem Abschalten des Elektromotors 36 des hydraulischen Aktuators und dem in Anlage gelangen des Stellglied 74 am Bremskolben 54 (was sich, wie in Fig. 8 veranschaulicht, in einem Anstieg der Stromaufnahme des Elektromotors 68 des mechanischen Aktuators zeigt) nicht zuviel Zeit vergehen darf. Der Startwert des Elektromotors 68 kann zu diesem Zweck beispielsweise adaptiv gesetzt werden. Sollte, mit anderen Worten, bei einer Betätigung der Feststellbremse erkannt werden, dass die Zeitspanne zwischen dem Abschalten des Elektromotors 36 und dem in Anlage gelangen des Stellglieds 74 zu lang ist, dann wird der Elektromotor 68 des mechanischen Aktuators bei der nächsten Feststellbremsung etwas früher gestartet, und umgekehrt. Die entsprechenden zeitlichen oder druckbezogenen Startwerte können in einem EEPROM abgespeichert werden. Um die Belastung des mechanischen Aktuators so gering wie möglich zu halten, ist der mit dem in Anlage gelangen des Stellglieds 74 an dem Bremskolben 54 einhergehende Anstieg der Stromaufnahme des Elektromotors 68 zu vermeiden oder jedenfalls auf einen geringen Anstieg zu begrenzen.

Ferner ist darauf zu achten, dass der Motor 36 des hydraulischen Aktuators zum richtigen Zeitpunkt gestartet wird. Wie bereits erläutert sollte der Elektromotor 36 idealerweise gestartet werden, kurz bevor mittels des mechanischen Aktuators ein Spannkraftwert erzielt wird, der einem äquivalenten Hydraulikfluiddruck von ungefähr 37,5 bar entspricht. Zur Ermittlung des richtigen Zeitpunkts ist ein Abgleich der mittels des mechanischen Aktuators erzielbaren Spannkraft einerseits und des Motormoments des Elektromotors 36 des hydraulischen Aktuators andererseits erforderlich. Ein solcher Abgleich kann beispielsweise umfassen, dass der Elektromotor 36 erst dann gestartet wird, wenn ein Mindestwert einer Stromaufnahme des Elektromotors 68 des mechanischen Aktuators erfasst wird (vgi. Fig. 8).

Für den Fachmann ist klar, dass der im Zusammenhang mit dem Ausführungsbeispiel erläuterte Betrieb einer Feststellbremse nicht darauf beschränkt ist, ein Fahrzeug im Stillstand zu halten. Vielmehr lässt sich die Betriebsweise auch beispielsweise in einem Auto-Hold oder Hill-Hold-Betrieb einer Feststellbremse implementieren.

Die Erfindung wurde anhand eines bevorzugten Ausführungsbeispiels erläutert. Für den Fachmann ist es jedoch offensichtlich, dass zahlreiche Änderungen und Ergänzungen vorgenommen werden können. Der Umfang der Erfindung ist daher ausschließlich durch die beigefügten Patentansprüche beschränkt.

## Patentansprüche

1. Verfahren zum Betätigen einer Feststellbremse (10), die einen in einer Hydraulikkammer (52) aufgenommenen Bremskolben (54) umfasst, der mittels eines hydraulischen Aktuators (36, 38) einerseits und eines mechanischen Aktuators (68, 70, 72) andererseits innerhalb der Hydraulikkammer (52) verschiebbar ist, umfassend die Schritte:
- Aktivieren des mechanischen Aktuators (68, 70, 72) zum Ver- schieben des Bremskolbens (54) in der Hydraulikkammer (52) derart, dass sich ein Volumen eines in der Hydraulikkammer (52) aufgenommenen Hydraulikfluids erhöht;
- Aktivieren des hydraulischen Aktuators (36, 38) bei mittels des mechanischen Aktuators (68, 70, 72) erhöhtem Hydraulikfluid- volumens in der Hydraulikkammer (52) zum Aufbauen oder Er- höhen einer Spannkraft der Feststellbremse (10); und
- Betätigen des mechanischen Aktuators (68, 70, 72) zum Halten der Spannkraft.

2. Verfahren nach Anspruch 1, **dadurch gekennzeichnet;**
**dass** der mechanische Aktuator (68, 70, 72) solange aktiviert wird, bis von dem Bremskolben (54) Reibbeläge (60, 64) in Anlage an eine Bremsscheibe (66) gebracht worden sind.

3. Verfahren nach Anspruch 1 oder 2, **dadurch gekennzeichnet,**
**dass** im Rahmen des Verschiebens des Kolbens (54) ein Unterdruck in der Hydraulikkammer (52) erzeugt wird, der Hydraulikfluid in die Hydraulikkammer (52) saugt.

4. Verfahren nach einem der vorhergehenden Ansprüche, ferner umfassend die Schritte:
- fortlaufendes Ermitteln einer sich im Rahmen des Aktivierens des mechanischen Aktuators (68, 70, 72) aufbauenden Spannkraft der Feststellbremse (10); und
- Aktivieren des hydraulischen Aktuators (36, 38) in Abhängig- keit der ermittelten Spannkraft.

5. Verfahren nach Anspruch 4, **dadurch gekennzeichnet,**
**dass** das fortlaufende Ermitteln der Spannkraft eine Spannkraftschätzung auf der Grundlage einer Stromaufnahme eines dem mechanischen Aktuator (68, 70, 72) zugeordneten Elektromotors (68) oder auf der Grundlage eines geschätzten oder gemessenen Vorschubs des Bremskolbens (54) umfasst.

6. Verfahren nach einem der vorangehenden Ansprüche, **dadurch gekennzeichnet,**
**dass** das Aktivieren des hydraulischen Aktuators (36, 38) dann erfolgt, wenn sich ein Volumen der Hydraulikkammer (52) aufgrund des aktivierten mechanischen Aktuators (68, 70, 72) soweit vergrößert hat, dass zwischen ungefähr 35% bis 75% der maximalen Hydraulikfluid-Aufnahmekapazität der Hydraulikkammer (52) erreicht sind.

7. Verfahren nach einem der vorangehenden Ansprüche, **dadurch gekennzeichnet,**
**dass** der mechanische Aktuator (68, 70, 72) während des Spannkraftaufbaus oder der Spannkrafterhöhung mittels des hydraulischen Aktuators (36, 38) zumindest zeitweilig deaktiviert wird.

8. Verfahren nach einem der vorhergehenden Ansprüche, ferner umfassend die Schritte:
- fortlaufendes Ermitteln einer sich im Rahmen des Aktivierens des hydraulischen Aktuators (36, 38) aufbauenden Spannkraft der Feststellbremse (10); und
- Deaktivieren des hydraulischen Aktuators (36, 38) in Abhän- gigkeit der ermittelten Spannkraft.

9. Verfahren nach Anspruch 8, **dadurch gekennzeichnet,**
**dass** das fortlaufende Ermitteln der Spannkraft eine Spannkraftschätzung auf der Grundlage einer Stromaufnahme eines dem hydraulischen Aktuator (36, 38) zugeordneten Elektromotors (36) oder auf der Grundlage eines geschätzten oder gemessenen Hydraulikfluiddrucks umfasst.

10. Computerprogrammprodukt mit Programmcodemitteln zum Durchführen des Verfahrens nach einem der Ansprüche 1 bis 9, wenn das Computerprogrammprodukt auf einer computergesteuerten Verarbeitungseinheit (44) läuft.

11. Computerprogrammprodukt nach Anspruch 10, gespeichert auf einem computerlesbaren Aufzeichnungsträger.

12. Feststellbremse (10), die einen in einer Hydraulikkammer (52) aufgenommenen Bremskolben (54) umfasst, der mittels eines hydr0aulischen Aktuators (36, 38) einerseits und eines mechanischen Aktuators (68, 70, 72) andererseits in der Hydraulikkammer (52) verschiebbar ist, umfassend:
- ein erstes Steuermodul (441), das ausgebildet ist, den mecha- nischen Aktuator (68, 70, 72) zum Verschieben des Bremskol- bens (34) in der Hydraulikkammer (52) derart zu aktivieren, dass sich ein Volumen eines in der der Hydraulikkammer (52) aufgenommenen Hydraulikfluids erhöht;
- ein zweites Steuermodul (442), das ausgebildet ist, den hyd- raulischen Aktuator (36, 38) bei mittels des mechanischen Ak- tuators (68, 70, 72) erhöhtem Hydraulikfluidvolumen in der Hydraulikkammer (52) zu aktivieren, um eine Spannkraft der Feststellbremse (10) aufzubauen oder zu erhöhen; und
- ein drittes Steuermodul (443), das ausgebildet ist, den mecha- nischen Aktuator (68, 70, 72) zum Halten der Spannkraft zu betätigen.

13. Feststellbremse nach Anspruch 12, **dadurch gekennzeichnet,**
**dass** der hydraulische Aktuator (36, 38) mindestens eine elektromotorisch betätigbare Hydraulikpumpe (38) umfasst.

14. Feststellbremse nach Anspruch 12 oder 13, **dadurch gekennzeichnet,**
**dass** der mechanische Aktuator (68, 70, 72) eine mit dem Bremskolben (52) zusammenwirkende, elektromotorisch betätigbare Mutter-/Spindelanordnung (70, 72) umfasst.

15. Feststellbremse nach einem der Ansprüche 12 bis 14, ferner umfassend eine Einrichtung zur fortlaufenden Spannkraftermittlung (76), wobei die Aktuatoren in Abhängigkeit der ermittelten Spannkraft ansteuerbar sind, und wobei die Einrichtung zur fortlaufenden Spannkraftermittlung vorzugsweise einen Hydraulikdrucksensor (76) oder einen Sensor zur Erfassung einer Stromaufnahme wenigstens einer Aktuatorkomponente (36, 68) umfasst.

## Claims

1. A method for actuating a parking brake (10) which comprises a brake piston (54) received in a hydraulic chamber (52), which brake piston is displaceable within the hydraulic chamber (52) by means of a hydraulic actuator (36, 38) on the one hand and a mechanical actuator (68, 70, 72) on the other hand, the method comprising the steps:
- activating the mechanical actuator (68, 70, 72) for displacing the brake piston (54) in the hydraulic chamber (52) in such a way that a volume of a hydraulic fluid contained in the hydraulic chamber (52) is increased;
- activating the hydraulic actuator (36, 38), with the hydraulic fluid vol- ume in the hydraulic chamber (52) having been increased by means of the mechanical actuator (68, 70, 72), for building up or increasing a clamping force of the parking brake (10); and
- actuating the mechanical actuator (68, 70, 72) for maintaining the clamping force.

2. The method according to claim 1, **characterized in that**
the mechanical actuator (68, 70, 72) is activated until friction linings (60, 64) have been moved into abutment against a brake disc (66) by the brake piston (54).

3. The method according to claim 1 or 2, **characterized in that** in the course of displacement of the piston (54) a negative pressure is generated in the hydraulic chamber (52) which draws hydraulic fluid into the hydraulic chamber (52).

4. The method according to any one of the preceding claims, further comprising the steps:
- continuously determining a clamping force of the parking brake (10) which is building up in the course of activation of the mechanical ac- tuator (68, 70, 72); and
- activating the hydraulic actuator (36, 38) in function of the clamping force determined.

5. The method according to claim 4, **characterized in that**
the continuous determination of the clamping force comprises an estimation of the clamping force on the basis of a current consumption of an electric motor (68) associated with the mechanical actuator (68, 70, 72) or on the basis of an estimated or measured advance of the brake piston (54).

6. The method according to any one of the preceding claims, **characterized in that**
activation of the hydraulic actuator (36, 38) takes place when a volume of the hydraulic chamber (52) has increased as a result of the activated mechanical actuator (68, 70, 72) until approximately 35% to 75% of the maximum hydraulic fluid receiving capacity of the hydraulic chamber (52) has been reached.

7. The method according to any one of the preceding claims, **characterized in that** the mechanical actuator (68, 70, 72) is at least temporarily deactivated during the build-up or increase of the clamping force by means of the hydraulic actuator (36, 38).

8. The method according to any one of the preceding claims, further comprising the steps:
- continuously determining a clamping force of the parking brake (10) which is building up in the course of activation of the hydraulic actua- tor (36, 38); and
- deactivating the hydraulic actuator (36, 38) as a function of the clamping force determined.

9. The method according to claim 8, **characterized in that** the continuous determination of the clamping force comprises an estimation of the clamping force on the basis of a current consumption of an electric motor (36) associated with the hydraulic actuator (36, 38) or on the basis of an estimated or measured hydraulic fluid pressure.

10. A computer program product with program code means for carrying out the method according to any one of claims 1 to 9 when the computer program product is running on a computer-controlled processing unit (44).

11. The computer program product according to claim 10, stored on a computer-readable recording carrier.

12. A parking brake (10) which comprises a brake piston (54) received in a hydraulic chamber (52), which brake piston is displaceable in the hydraulic chamber (52) by means of a hydraulic actuator (36, 38) on the one hand and a mechanical actuator (68, 70, 72) on the other, comprising:
- a first control module (441) which is configured to activate the me- chanical actuator (68, 70, 72) to displace the brake piston (34) in the hydraulic chamber (52) in such a way that a volume of a hydraulic fluid contained in the hydraulic chamber (52) is increased;
- a second control module (442) which is configured to activate the hy- draulic actuator (36, 38), with the hydraulic fluid volume in the hydrau- lic chamber (52) having been increased by means of the mechanical actuator (68, 70, 72), in order to build up or increase a clamping force of the parking brake (10); and
- a third control module (443) which is configured to actuate the me- chanical actuator (68, 70, 72) to maintain the clamping force.

13. The parking brake according to claim 12, **characterized in that** the hydraulic actuator (36, 38) comprises at least an electric-motor actuatable hydraulic pump (38).

14. The parking brake according to claim 12 or 13, **characterized in that** the mechanical actuator (68, 70, 72) comprises an electric-motor actuatable nut/spindle arrangement (70, 72) cooperating with the brake piston (52).

15. The parking brake according to any one of claims 12 to 14, further comprising a device for continuously determining the clamping force (76), the actuators being activatable as a function of the clamping force determined, and wherein the device for continuously determining the clamping force preferably comprises a hydraulic pressure sensor (76) or a sensor for detecting a current consumption of at least one actuator component (36, 68).

## Revendications

1. Technique d'actionnement d'un frein de stationnement (10) qui comporte un piston de frein (54) logé dans une chambre à fluide hydraulique (52) et pouvant coulisser à l'intérieur de la chambre à fluide hydraulique (52) à l'aide d'un actionneur hydraulique (36, 38) d'une part et d'un actionneur mécanique (68, 70, 72) d'autre part, comprenant les étapes suivantes :
- l'actionnement de l'actionneur mécanique (68, 70, 72) pour dé- placer le piston de frein (54) dans la chambre à fluide hydrau- lique (52) de manière à augmenter le volume d'un fluide hydraulique se trouvant dans la chambre à fluide hydrau- lique (52),
- l'actionnement de l'actionneur hydraulique (36, 38) pour créer ou augmenter, en présence d'un volume de fluide dans la chambre à fluide hydraulique (52) augmenté au moyen de l'actionneur mécanique (68, 70 72), une force de serrage du frein de station- nement (10), et
- l'actionnement de l'actionneur mécanique (68, 70, 72) pour maintenir ladite force de serrage.

2. Technique d'actionnement selon la revendication 1, **caractérisée en ce que** l'actionneur mécanique (68, 70, 72) est actionné jusqu'à ce que le piston de frein (54) amène les garnitures de friction (60, 64) en contact avec un disque de frein (66).

3. Technique d'actionnement selon la revendication 1 ou 2, **caractérisée en ce que** le déplacement du piston (54) engendre une sous-pression dans la chambre hydraulique (52), laquelle aspire le fluide hydraulique dans la chambre hydraulique (52).

4. Technique d'actionnement selon l'une des revendications précédentes, comprenant en outre pour étapes :
- la détection en continu d'une force de serrage du frein de stationnement (10) se constituant suite à l'actionnement de l'actionneur mécanique (68, 70, 72) et
- l'actionnement de l'actionneur hydraulique (36, 38) en fonction de la force de serrage détectée.

5. Technique d'actionnement selon la revendication 4, **caractérisée en ce que** la détection en continu de la force de serrage comprend une estimation de la force de serrage sur la base d'un courant électrique consommé par un moteur électrique (68) associé à l'actionneur mécanique (68, 70, 72) ou sur la base de l'avancement estimé ou mesuré du piston de freinage (54).

6. Technique d'actionnement selon l'une des revendications précédentes, **caractérisée en ce qu'**il y a actionnement de l'actionneur hydraulique (36, 38) lorsque le volume de la chambre hydraulique (52) a été augmenté sous l'action de l'actionneur mécanique (68, 70, 72) au point qu'environ 35 à 75% de la contenance maximale de fluide hydraulique de la chambre hydraulique (52) sont atteints.

7. Technique d'actionnement selon l'une des revendications précédentes, **caractérisée en ce que** l'actionneur mécanique (68, 70, 72) est désactionné pour le moins temporairement pendant la constitution ou l'augmentation de la force de serrage au moyen de l'actionneur hydraulique (36, 38).

8. Technique d'actionnement selon l'une des revendications précédentes, comprenant en outre les étapes suivantes :
- la détection en continu d'une force de serrage du frein de sta- tionnement (10) se constituant lors de l'actionnement de l'actionneur hydraulique (36, 38), et
- le désactionnement de l'actionneur hydraulique (36, 38) en fonc- tion de la force de serrage détectée.

9. Technique d'actionnement selon la revendication 8, **caractérisée en ce que** la détection en continu de la force de serrage comprend une estimation de la force de serrage sur la base d'un courant électrique consommé par un moteur électrique (36) associé à l'actionneur hydraulique (36, 38) ou sur la base d'une pression de fluide hydraulique estimée ou mesurée.

10. Programme d'ordinateur contenant des moyens de code de programme pour mettre en oeuvre ladite technique d'actionnement selon l'une des revendications 1 à 9 lorsque le programme d'ordinateur tourne sur une unité de traitement (44) commandée par ordinateur.

11. Programme d'ordinateur selon la revendication 10, mémorisé sur un support d'enregistrement lisible par ordinateur.

12. Frein de stationnement (10) qui comporte un piston de frein (54) logé dans une chambre à fluide hydraulique (52) et pouvant coulisser à l'intérieur de la chambre à fluide hydraulique (52) à l'aide d'un actionneur hydraulique (36, 38) d'une part et d'un actionneur mécanique (68, 70, 72) d'autre part, comprenant les étapes suivantes :
- un premier module de commande (441) qui est conçu pour ac- tionner l'actionneur mécanique (68, 70, 72) pour déplacer le pis- ton de frein (34) dans la chambre à fluide hydraulique (52) de sorte à augmenter le volume d'un fluide hydraulique se trouvant dans la chambre à fluide hydraulique (52)
- un deuxième module de commande (442) qui est conçu pour ac- tionner l'actionneur hydraulique (36, 38) pour créer ou augmen- ter, en présence d'un volume de fluide dans la chambre à fluide hydraulique (52) augmenté au moyen de l'actionneur mécanique (68, 70, 72), une force de serrage du frein de stationnement (10), et
- un troisième module de commande (443) qui est conçu pour ac- tionner l'actionneur mécanique (68, 70, 72) pour maintenir ladite force de serrage.

13. Frein de stationnement selon la revendication 12, **caractérisé en ce que** l'actionneur hydraulique (36, 38) comprend au moins une pompe hydraulique (38) actionnable par moteur électrique.

14. Frein de stationnement selon la revendication 12 ou 13, **caractérisé en ce que** l'actionneur mécanique (68, 70, 72) comprend un ensemble broche/écrou (70, 72) coopérant avec le piston de frein (52) et actionnable par moteur électrique.

15. Frein de stationnement selon l'une des revendications 12 à 14, comprenant en outre un dispositif pour la détection en continu de la force de serrage (76), les actionneurs pouvant être commandés en fonction de la force de serrage détectée et ledit dispositif servant à la détection en continu de la force de serrage comprenant préférentiellement un capteur de pression hydraulique (76) ou un capteur pour la détection d'un courant électrique consommé par au moins un élément d'actionnement (36, 68).
